# EUROPEAN PATENT APPLICATION

(11) **EP 3 226 513 A1**
(43) Date of publication of application: **04.10.2017**
(21) Application number: 15801973.7
(22) Date of filing: 06.05.2015
(51) Int. Cl.: H04L 29/08

(54) **NETWORK-BASED FILE TRANSFER METHOD AND SYSTEM**

(30) Priority: 24.11.2014 CN 201410678129
(71) Applicant: JRD Communication Inc., Shenzhen, Guangdong 518057 (CN)
(72) Inventor: YU, Bin, Shenzhen Guangdong 518057 (CN); YANG, Weiqin, Shenzhen Guangdong 518057 (CN)
(74) Representative: Isarpatent
(86) International application number: PCT/CN2015/078418
(87) International publication number: WO 2016/082467

(57) **Abstract**

The present invention provides a method for transmitting documents based on network and system thereof. The method comprises: continuous storage space is created in RAM storage of the mobile phone wherein the size of continuous storage space is greater than or equal to the summation size of documents; mobile phone copies the documents required for transmission from ROM storage to the continuous created storage space of RAM storage one by one; and data stored in the continuous created storage space of RAM storage are transmitted to another mobile phone by WIFI protocol. While the user utilizes the mobile phone to transmit a large number of documents by way of WIFI protocol for implementing the data transmission method of the present invention, the transferred documents are stored in the continuous storage space and all documents are transmitted in a one-time to improve utilization rate of WIFI bandwidth for the user-friendliness.

## Description

### BACKGROUND OF THE INVENTION

### Field of Invention

The present invention relates to a field of a wireless communication technology, and more particularly to a method for transmitting the documents based on network and system employing the same.

### Description of Prior Art

With the development of wireless transmission technology, e.g. Wireless Fidelity (WIFI) protocol, the transmission amount of the documents between mobile terminals by using the wireless transmission technology, e.g. the WIFI protocol, is increasingly and frequently adopted. For example, one mobile terminal sends documents to another mobile terminal by using a WIFI Direct mechanism between the mobile terminals.

Conventionally, the documents are transmitted one by one. Since the storage space occupied by the documents within the mobile terminals is discontinuous, it is required to search an address of another document and then transmit the searched second document to the target mobile terminal by the source mobile terminal after the source mobile terminal sends one document completely. When the high-volume document transmission is applied between two mobile terminals by using the wireless transmission technology, e.g. the WIFI protocol, it is found that the occupied WIFI bandwidth (i.e. document transmission rate) instantly is changed to zero after the current document is sent completely. Afterwards, when starting to transmit the next document, the bandwidth (i.e. document transmission rate) is gradually increased until the maximum value is achieved. Since the file sizes of some documents are too small, even the documents have been transmitted completely before the maximum value of the transmission rate is achieved.

According to the above-mentioned descriptions, because the documents are limited by the discontinuous storing address, a large number of the document transmission between the mobile phones by way of WIFI protocol cannot maintain the full transmission speed, resulting in a low utilization rate of the bandwidth.

Consequently, there is a need to improve the conventional techniques and to develop a novel manner.

### SUMMARY OF THE INVENTION

Based on the above-mentioned drawbacks, one objective of the present invention is to provide a method for transmitting the documents based on network and system employing the same to solve the above problems including that the documents are limited by the discontinuous storing address, a large number of the document transmission between the mobile phones by way of WIFI protocol cannot maintain the full transmission speed, resulting in a low utilization rate of the bandwidth.

For the above-mentioned problem, the present invention employs the following technical schemes.

A method for transmitting documents based on a network comprises the step of:
(A) creating a continuous storage space in a RAM storage of a mobile phone wherein a size of a continuous storage space is greater than or equal to a summation size of the documents required for transmission;
(B) copying the documents required for transmission from a ROM storage to the continuous storage space of the RAM storage one by one by the mobile phone; and
(C) transmitting data which are stored in the continuous created storage space of the RAM storage to another mobile phone by way of a network protocol.

Before the step (A), the method for transmitting documents based on the network further comprises the step of: (S) acquiring and storing starting addresses and sizes of the documents correspondingly required for transmission in a ROM storage by the mobile phone.

In the method for transmitting documents based on the network, the step (B) further comprises the steps of: (B1) reading the stored starting addresses and the stored sizes of the documents correspondingly required for transmission in the ROM storage by the mobile phone; and (B2) in turn copying the documents required for transmission to the continuous storage space of the RAM storage.

In the method for transmitting documents based on the network, the step (C) further comprises the steps of: (C1) receiving and storing the data transmitted by the ROM storage of the mobile phone by the continuous storage space of the RAM storage; and (C2) sending the stored data in the continuous storage space of the RAM storage to another mobile phone by way of the WIFI protocol when the continuous storage space of the RAM storage receives the data transmitted by the ROM storage of the mobile phone after one second.

In the method for transmitting documents based on the network, the RAM storage is either volatile memory or DDR RAM memory, and the ROM storage is either non-volatile memory or FLASH memory.

A system for transmitting documents based on a network comprises: a storage space creation module, for creating a continuous storage space in a RAM storage of a mobile phone wherein a size of the continuous storage space is equal to a summation size of the documents required for transmission; a copying module, for copying the documents required for transmission from a ROM storage to the continuous storage space of the RAM storage one by one; and a WIFI transmission module, for transmitting data, which stored in the continuous storage space of the RAM storage, to another mobile phone byte by byte by way of a WIFI protocol.

The system for transmitting documents based on the network further comprises: a document information acquisition module, for acquiring and storing starting addresses and sizes of the documents correspondingly required for transmission in the ROM storage.

In the system for transmitting documents based on the network, the copying module further comprises: a reading unit, for reading starting addresses and sizes of the documents correspondingly required for transmission in the ROM storage; and a first transmission unit, for continuously copying the documents required for transmission to the continuous storage space of the RAM storage.

In the system for transmitting documents based on the network, the WIFI transmission module further comprises:
a receiving and storing unit, for controlling the continuous storage space of the RAM storage to receive and store the data transmitted by the ROM storage of the mobile phone; and
a second transmission unit, for transmitting the stored data in the continuous storage space of the RAM storage to another mobile phone by way of the WIFI protocol when the continuous storage space of the RAM storage receives the data transmitted by the ROM storage of the mobile phone after one second.

In the system for transmitting documents based on the network, the RAM storage is either volatile memory or DDR RAM memory, and the ROM storage is either non-volatile memory or FLASH memory.

The present invention provides a method for transmitting documents based on network and system thereof. The method comprises: continuous storage space is created in RAM storage of the mobile phone wherein the size of continuous storage space is greater than or equal to the summation size of documents; mobile phone copies the documents required for transmission from ROM storage to the continuous created storage space of RAM storage one by one; and data stored in the continuous created storage space of RAM storage are transmitted to another mobile phone by WIFI protocol. While the user utilizes the mobile phone to transmit a large number of documents by way of WIFI protocol for implementing the data transmission method of the present invention, the transferred documents are stored in the continuous storage space and all documents are transmitted in a one-time to improve utilization rate of WIFI bandwidth for the user-friendliness.

### BRIEF DESCRIPTION OF THE DRAWINGS

FIG. 1 is a flow chart of a method for transmitting the documents based on the network according to a first preferred embodiment of the present invention;
FIG. 2 is a flow chart of a method for transmitting the documents based on the network according to a second preferred embodiment of the present invention; and
FIG. 3 is a schematic structural block diagram of a system for transmitting the documents based on the network according to the first preferred embodiment of the present invention.

### DETAILED DESCRIPTION OF THE PREFERRED EMBODIMENTS

The following embodiments refer to the accompanying drawings for exemplifying specific implementable embodiments of the present invention. It should be noted that the exemplary described embodiments are used to describe and understand the present invention, but the present invention is not limited thereto.

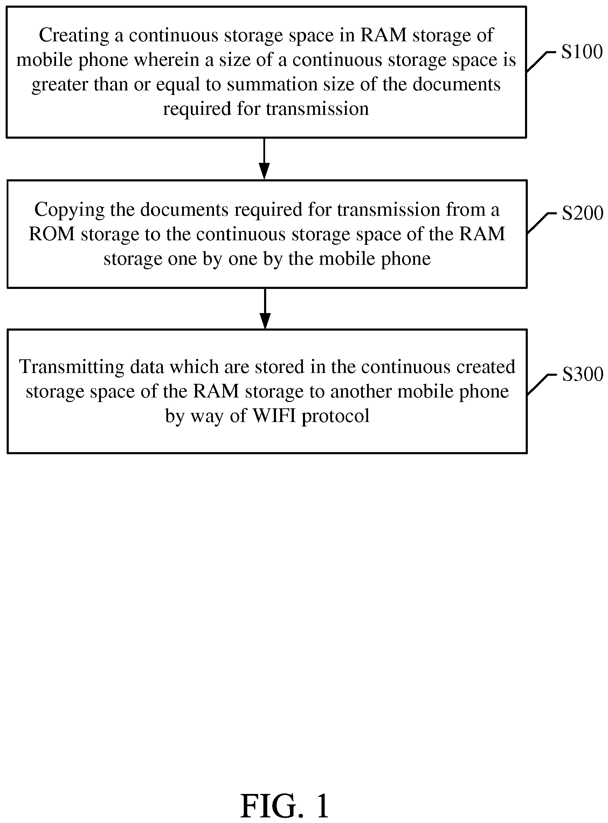

Please refer to FIG. 1, which is a flow chart of a method for transmitting the documents based on the network according to a first preferred embodiment of the present invention. As shown in FIG. 1, the method for transmitting the documents based on the network comprises the following steps.

In step S100, the continuous storage space is created in the RAM storage of the mobile phone wherein the size of the continuous storage space is greater than or equal to the summation size of the documents required for transmission.

Before the step S100, further comprising the step:

In step S110, the mobile phone acquires and stores the starting addresses and the sizes of the documents required for transmission in the ROM storage.

In one preferred embodiment, it is required to transmit three documents wherein the starting addresses and the sizes of the documents in the ROM storage are described below:

First document: the starting address is 0x10000000 and the size is 80k (bytes);

Second document: the starting address is 0x120C0000 and the size is 800k (bytes); and

Third document: the starting address is 0x1E000000 and the size is 60k (bytes).

The starting addresses and the sizes of the documents required for transmission, which are stored in the mobile phone, are stored as following table 1.

**Table 1:**

| | Starting addresses in the ROM storage | Document size |
|---|---|---|
| First document | 0x10000000 | 80k |
| Second document | 0x120C0000 | 800k |
| Third document | 0x1E000000 | 60k |
| ...... | ...... | ...... |

For the preparation of creating the continuous storage space in the RAM storage of the mobile phone in advance to integrate a plurality of documents into one continuous document, the mobile phone acquires the size of the documents required for transmitting to another mobile phone.

In step S200, the mobile phone copies the documents required for transmission from the ROM storage to the continuous created storage space of the RAM storage one by one.

During the step S200, further comprising the steps:

In step S201, the mobile phone reads the stored starting addresses and the stored sizes of the documents correspondingly required for transmission in the ROM storage; and

In step S202, the documents required for transmission, in turn, are continuously copied to the continuous storage space of the RAM storage wherein "continuous copy" means that one by one the documents are successively stored to the RAM storage.

In step S300, the data stored in the continuous created storage space of the RAM storage are transmitted to another mobile phone by way of the WIFI protocol.

During the step S300, further comprising the steps:

In step S301, the created storage space of the RAM storage receives and stores the data transmitted by the ROM storage of the mobile phone; and

In step S302, the stored data in the created storage space of the RAM storage are sent to another mobile phone by way of the WIFI protocol when the created storage space of the RAM storage receives the data transmitted by the ROM storage of the mobile phone after one second.

In one embodiment, the RAM storage is volatile memory and DDR RAM memory, and the ROM storage is non-volatile memory and FLASH memory.

During the step S110, the continuous storage space, e.g. 940k bytes, is created in the ROM storage if the summation size of the three documents is equal to the sum of 80k bytes, 800k bytes and 60k bytes wherein the starting address of the continuous storage space is 0x60000000.

In one embodiment of the step S200, the data in the address 0x10000000 followed by the size of 80k bytes of the ROM storage are copied to the starting address 0x60000000 of the RAM storage. The data in the address 0x120C0000 followed by the size of 800k bytes of the ROM storage are copied to the address 0x60000000 added by 80k bytes of the RAM storage. The data in the address 0x1E000000 followed by the size of 60k bytes of the ROM storage are copied to the address 0x60000000 added by 80k and 800k bytes of the RAM storage.

In one embodiment of the step S300, the data in the starting address 0x60000000 of the RAM storage followed by 940k bytes are transmitted to another mobile phone by way of WIFI protocol.

Regarding to the steps S200 and S300, since the document transmission in the step S200 is implemented by an internal bus which has a higher data transmission rate than that in the step S300, it is only required to perform the step S300 in a relatively short period of time, e.g. preferably one second, in advance. In other words, when the step S200 is performed after one second, no matter how the step S200 is implemented completely, the step S300 starts to be executed.

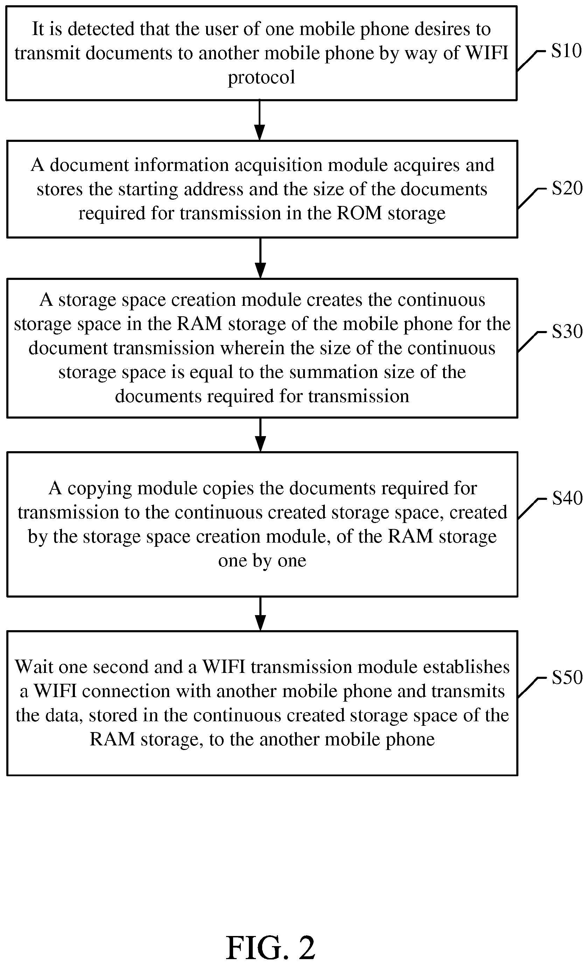

In another embodiment, the present invention provides is a flow chart of a method for transmitting the documents based on the network according to a second preferred embodiment of the present invention, as shown in FIG. 2. The method comprises the following steps.

In step S10, it is detected that the user of one mobile phone desires to transmit documents to another mobile phone by way of WIFI protocol.

In step S20, a document information acquisition module acquires and stores the starting addresses and the sizes of the documents correspondingly required for transmission in the ROM storage.

In step S30, a storage space creation module creates the continuous storage space in the RAM storage of the mobile phone for the document transmission wherein the size of the continuous storage space is equal to the summation size of the documents required for transmission.

In step S40, a copying module copies the documents required for transmission to the continuous created storage space, created by the storage space creation module, of the RAM storage one by one.

In step S50, wait one second; and a WIFI transmission module establishes a WIFI connection with another mobile phone and transmits the data, stored in the continuous created storage space of the RAM storage, to the another mobile phone.

Based on the aforementioned descriptions, the present invention provides a method for transmitting the documents based on network. The present invention sets forth a method for transmitting a large number of documents by way of WIFI network protocol. All the documents required for transmission are stored in the continuous storage space of the RAM storage in order to improve utilization rate of the bandwidth with respect to WIFI network.

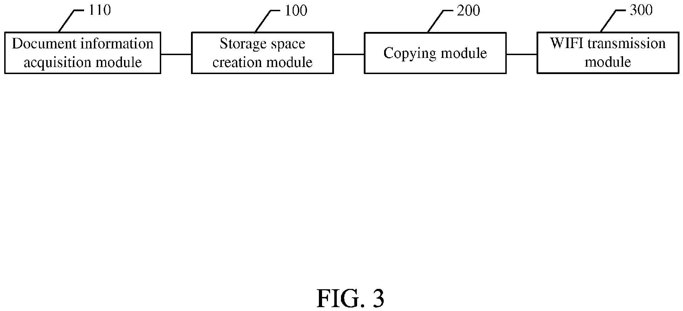

Based on the above embodiments of FIG. 3, the present invention provides a system for transmitting the documents based on the network. The system comprises:
a storage space creation module 100 is used to create the continuous storage space in the RAM storage of the mobile phone wherein the size of the continuous storage space is greater than or equal to the summation size of the documents required for transmission, as indicated above;
a copying module 200 is used to copy the documents required for transmission one by one from the ROM storage to the continuous created storage space of the RAM storage, as indicated above; and
a WIFI transmission module 300 is used to transmit the data, stored in continuous created storage space of the RAM storage, to the another mobile phone byte by byte using WIFI protocol, as indicated above.

The system for transmitting the documents based on the network further comprises:
a document information acquisition module 110 is used to acquire and store the starting addresses and the sizes of the documents correspondingly required for transmission in the ROM storage, as indicated above.

In the system for transmitting the documents based on the network, the copying module 200 comprises:
a reading unit is used to read the starting addresses and the sizes of the documents correspondingly required for transmission in the ROM storage, as indicated above; and
a first transmission unit is used to continuously copy the documents required for transmission to the created RAM storage, as indicated above.

In the system for transmitting the documents based on the network, the WIFI transmission module comprises:
a receiving and storing unit is used to control the created storage space of the RAM storage to receive and store the data transmitted by the ROM storage of the mobile phone, as indicated above; and
a second transmission unit is used to send the stored data in the created storage space of the RAM storage to another mobile phone by way of the WIFI protocol when the created storage space of the RAM storage receives the data transmitted by the ROM storage of the mobile phone after one second, as indicated above.

In the above embodiments of the system for transmitting the documents based on the network, the RAM storage is volatile memory and DDR RAM memory, and the ROM storage is non-volatile memory and FLASH memory, as indicated above.

According to the above-mentioned descriptions, the present invention provides a method for transmitting the documents based on network and system employing the same. The method comprises: the continuous storage space is created in the RAM storage of the mobile phone wherein the size of the continuous storage space is greater than or equal to the summation size of the documents required for transmission; the mobile phone copies the documents required for transmission from ROM storage to the continuous created storage space of the RAM storage one by one; and the data stored in the continuous created storage space of the RAM storage are transmitted to another mobile phone by way of the WIFI protocol. While the user utilizes the mobile phone to transmit a large number of documents by way of WIFI protocol for implementing the data transmission method of the present invention, the transferred documents are stored in the continuous storage space and all the documents are transmitted in a one-time to improve the utilization rate of WIFI bandwidth for the user-friendliness.

As is understood by a person skilled in the art, the foregoing preferred embodiments of the present invention are illustrative rather than limiting of the present invention. It is intended that they cover various modifications and similar arrangements be included within the spirit and scope of the present invention, the scope of which should be accorded the broadest interpretation so as to encompass all such modifications and similar structures.

## Claims

1. A method for transmitting documents based on a network, the method comprising the step of:
(A) acquiring and storing starting addresses and sizes of the documents correspondingly required for transmission in a ROM storage by a mobile phone;
(B) creating a continuous storage space in a RAM storage of the mobile phone wherein a size of the continuous storage space is greater than or equal to a summation size of the documents required for transmission;
(C) copying the documents required for transmission from the ROM storage to the continuous storage space of the RAM storage one by one by the mobile phone; and
(D) transmitting data which are stored in the continuous created storage space of the RAM storage to another mobile phone by way of a network protocol.

2. The method for transmitting documents based on the network of claim 1, wherein the step (C) further comprises the steps of:
(C1) reading the stored starting addresses and the stored sizes of the documents required for transmission in the ROM storage by the mobile phone; and
(C2) in turn copying the documents required for transmission to the continuous storage space of the RAM storage.

3. The method for transmitting documents based on the network of claim 2, wherein the step (D) further comprises the steps of:
(D1) receiving and storing the data transmitted by the ROM storage of the mobile phone by the continuous storage space of the RAM storage; and
(D2) sending the stored data in the continuous storage space of the RAM storage to another mobile phone by way of the WIFI protocol when the continuous storage space of the RAM storage receives the data transmitted by the ROM storage of the mobile phone after one second.

4. The method for transmitting documents based on the network of claim 1, wherein the RAM storage is either volatile memory or DDR RAM memory, and the ROM storage is either non-volatile memory or FLASH memory.

5. A method for transmitting documents based on a network, the method comprising the step of:
(A) creating a continuous storage space in a RAM storage of a mobile phone wherein a size of a continuous storage space is greater than or equal to a summation size of the documents required for transmission;
(B) copying the documents required for transmission from a ROM storage to the continuous storage space of the RAM storage one by one by the mobile phone; and
(C) transmitting data which are stored in the continuous created storage space of the RAM storage to another mobile phone by way of a network protocol.

6. The method for transmitting documents based on the network of claim 5, before the step (A), further comprising the step of:
(S) acquiring and storing starting addresses and sizes of the documents required correspondingly for transmission in a ROM storage by the mobile phone.

7. The method for transmitting documents based on the network of claim 5, wherein the step (B) further comprises the steps of:
(B1) reading the stored starting addresses and the stored sizes of the documents required for transmission in the ROM storage by the mobile phone; and
(B2) in turn copying the documents required for transmission to the continuous storage space of the RAM storage.

8. The method for transmitting documents based on the network of claim 7, wherein the step (C) further comprises the steps of:
(C1) receiving and storing the data transmitted by the ROM storage of the mobile phone by the continuous storage space of the RAM storage; and
(C2) sending the stored data in the continuous storage space of the RAM storage to another mobile phone by way of the WIFI protocol when the continuous storage space of the RAM storage receives the data transmitted by the ROM storage of the mobile phone after one second.

9. The method for transmitting documents based on the network of claim 5, wherein the RAM storage is either volatile memory or DDR RAM memory, and the ROM storage is either non-volatile memory or FLASH memory.

10. The method for transmitting documents based on the network of claim 6, wherein the RAM storage is either volatile memory or DDR RAM memory, and the ROM storage is either non-volatile memory or FLASH memory.

11. The method for transmitting documents based on the network of claim 7, wherein the RAM storage is either volatile memory or DDR RAM memory, and the ROM storage is either non-volatile memory or FLASH memory.

12. The method for transmitting documents based on the network of claim 8, wherein the RAM storage is either volatile memory or DDR RAM memory, and the ROM storage is either non-volatile memory or FLASH memory.

13. A system for transmitting documents based on a network, the system comprising:
a storage space creation module, for creating a continuous storage space in a RAM storage of a mobile phone wherein a size of the continuous storage space is equal to a summation size of the documents required for transmission;
a copying module, for copying the documents required for transmission from a ROM storage to the continuous storage space of the RAM storage one by one; and
a WIFI transmission module, for transmitting data, which stored in the continuous storage space of the RAM storage, to another mobile phone byte by byte by way of a WIFI protocol.

14. The system for transmitting documents based on the network of claim 13, further comprising:
a document information acquisition module, for acquiring and storing starting addresses and sizes of the documents correspondingly required for transmission in the ROM storage.

15. The system for transmitting documents based on the network of claim 13, wherein the copying module further comprises:
a reading unit, for reading starting addresses and sizes of the documents required for transmission in the ROM storage; and
a first transmission unit, for continuously copying the documents required for transmission to the continuous storage space of the RAM storage.

16. The system for transmitting documents based on the network of claim 15, wherein the WIFI transmission module further comprises:
a receiving and storing unit, for controlling the continuous storage space of the RAM storage to receive and store the data transmitted by the ROM storage of the mobile phone; and
a second transmission unit, for transmitting the stored data in the continuous storage space of the RAM storage to another mobile phone by way of the WIFI protocol when the continuous storage space of the RAM storage receives the data transmitted by the ROM storage of the mobile phone after one second.

17. The system for transmitting documents based on the network of claim 13, wherein the RAM storage is either volatile memory or DDR RAM memory, and the ROM storage is either non-volatile memory or FLASH memory.

18. The system for transmitting documents based on the network of claim 14, wherein the RAM storage is either volatile memory or DDR RAM memory, and the ROM storage is either non-volatile memory or FLASH memory.

19. The system for transmitting documents based on the network of claim 15, wherein the RAM storage is either volatile memory or DDR RAM memory, and the ROM storage is either non-volatile memory or FLASH memory.

20. The system for transmitting documents based on the network of claim 16, wherein the RAM storage is either volatile memory or DDR RAM memory, and the ROM storage is either non-volatile memory or FLASH memory.
